Europäisches Patentamt

(19) European Patent Office

Office européen des brevets

(11) Numéro de publication: **0 194 926**
**A1**

(12) **DEMANDE DE BREVET EUROPEEN**

(21) Numéro de dépôt: 86400457.7

(22) Date de dépôt: 05.03.86

(51) Int. Cl.⁴: **B 25 J 11/00**
B 25 J 5/04, B 25 J 21/00
B 05 B 13/06, B 63 B 57/02

(30) Priorité: 15.03.85 FR 8503870

(43) Date de publication de la demande:
17.09.86 Bulletin 86/38

(84) Etats contractants désignés:
BE DE GB IT LU NL SE

(71) Demandeur: **CHANTIERS DU NORD ET DE LA MEDITERRANEE**
**28 rue Dumont-d'Urville**
**F-75784 Paris Cédex 16(FR)**

(72) Inventeur: **Moreau, Jean-Pierre**
**Résidence Spermalie avenue Bortier No. 46**
**B-8470 De Panne(BE)**

(74) Mandataire: **Polus, Camille et al,**
**c/o Cabinet Lavoix 2, Place d'Estienne d'Orves**
**F-75441 Paris Cedex 09(FR)**

(54) Robot multitâches pour le traitement des parois internes de cuves ou de capacités.

(57) Le robot selon l'invention comporte:

un organe support (7, 151) monté dans une ouverture (6) prévue sur la paroi supérieure (2) de la citerne (1) et pénétrant à l'intérieur de ladite citerne,

un ensemble de bras articulés (60) montés sur ledit organe de support et pouvant se déployer à l'intérieur de la citerne,

un organe porte-outil (80) à plusieurs degrés de liberté fixé à l'extrémité de l'ensemble articulé (60),

un ensemble de stockage (40) contenant un certain nombre d'outils de production (50),

des moyens de commande de l'orientation de l'organe support, de l'ensemble de bras articulés et de l'organe porte-outil et d'alimentation des différents outils de production.

./...

Croydon Printing Company Ltd.

EP 0 194 926 A1

FIG1

La présente invention a pour objet un robot multitâches pour le traitement des parois internes de cuves ou de capacités de grandes dimensions.

Les parois internes des cuves, citernes ou capacités servant au transport par navire ou à l'emmagasinage des produits par exemple chimiques ou alimentaires doivent subir, avant leur utilisation, un traitement particulier par exemple de nettoyage, de grenaillage ou de peinture, et doivent faire l'objet d'opérations périodiques de vérification et de maintenance, comme par exemple des opérations de nettoyage, de soudage, de contrôle ou de détection des fuites éventuelles.

Ces cuves étant généralement de grandes dimensions et d'accès difficile, les différentes opérations de traitement des parois internes sont extrêmement délicates à réaliser et nécessitent le montage et le démontage d'échaffaudages, travail toujours long et fastidieux, créant ainsi une immobilisation coûteuse.

Jusqu'à présent, le travail est réalisé directement à l'intérieur de la cuve par l'homme, qui doit, dans la plupart des cas, évoluer dans un milieu hostile donc dangereux pour la santé.

L'invention concerne donc un robot permettant, sans présence humaine directe, de traiter et/ou d'inspecter des surfaces importantes dans des cuves ou citernes de grandes dimensions et d'accès difficile, qui soit de conception très simple et d'une grande fiabilité.

Le robot multitâches selon l'invention comporte :

- un organe support monté dans une ouverture prévue sur la paroi supérieure de la cuve et pénétrant à l'intérieur de ladite cuve, ledit organe support définissant un axe de pivotement perpendiculaire à la paroi supérieure de la cuve,

- un ensemble de bras articulés montés sur ledit organe support et pouvant se déployer à l'intérieur de la cuve,

- un organe porte-outil à plusieurs degrés de liberté fixé à l'extrémité de l'ensemble articulé et assurant la mise en position et le mouvement d'un outil de production,

- un ensemble de stockage contenant un certain nombre d'outils de production,

- des moyens de commande et de contrôle de l'orientation de l'organe support, de l'ensemble de bras articulés, et de l'organe porte-outil,

- des moyens d'alimentation des différents outils de production.

Mais l'invention sera mieux comprise par la description détaillée du robot multitâches selon l'invention, représenté sur les dessins annexés, et de certains exemples de réalisation.

La Fig. 1 représente l'ensemble du robot selon l'invention.

La Fig. 2 est une vue à plus grande échelle du détail A de la Fig. 1.

La Fig. 3 est une vue à plus grande échelle du détail B de la Fig. 1.

La Fig. 4 est une vue en coupe selon la ligne IV-IV de la Fig. 3.

La Fig. 5 est une vue en coupe selon la ligne V-V de la Fig. 3.

La Fig. 6 est une vue à plus grande échelle du détail C de la Fig. 1.

La Fig. 7 est une vue à plus grande échelle du détail D de la Fig. 1.

3

La Fig. 8 est une variante du détail D de la Fig. 1.

La Fig. 9 est une vue à plus grande échelle du détail E de la Fig. 1 montrant l'organe porte-outil.

La Fig. 10 est une vue de dessus de la Fig. 9.

La Fig. 11 est une vue schématique en perspective montrant la prise d'un outil par l'organe porte-outil dans l'ensemble de stockage.

La Fig. 12 représente un second exemple de réalisation de l'invention.

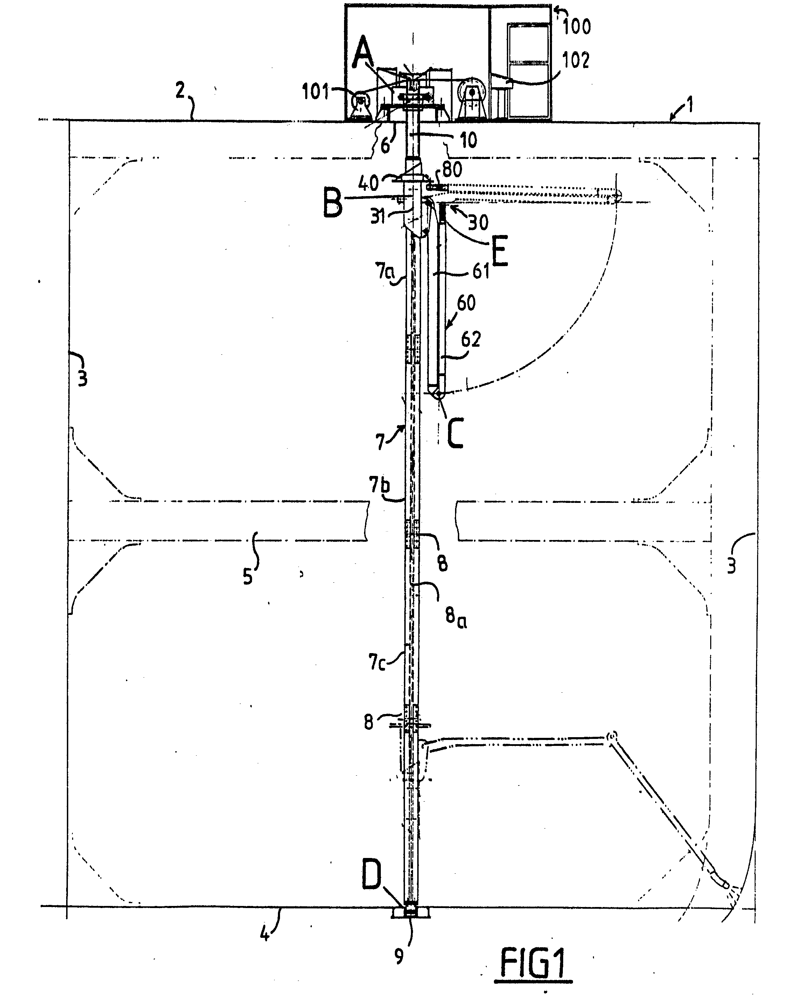

En se référant tout d'abord à la Fig. 1, on a représenté une citerne 1, par exemple d'un navire, pour le transport de produits alimentaires ou chimiques. Dans le cas où il s'agit d'un navire neuf, les parois internes de la citerne 1 doivent subir, avant une utilisation, un traitement particulier de préparation de surface et de peinture. S'il s'agit de cuves plus anciennes, les parois internes doivent périodiquement faire l'objet d'opérations de vérification et de maintenance qui peuvent être également des opérations de nettoyage, de préparation de surface et de peinture, ou par exemple des opérations de soudage ou de contrôle.

Le robot selon l'invention permet de réaliser, sans présence humaine directe, ces différentes opérations.

La cuve 1 généralement de grandes dimensions, est formée par une paroi supérieure 2, des parois latérales 3 et un fond 4. Des poutrelles de rigidification 5 sont montées entre les parois latérales 3. La paroi supérieure 2 comporte une ouverture 6 d'accès à l'intérieur de la citerne.

4

Par cette ouverture 6, est introduit en position verticale un mât modulaire 7 qui d'un côté repose sur le fond 4 par un moyen de guidage 9 décrit ultérieurement et de l'autre côté débouche à l'extérieur de la citerne 1 par ladite ouverture 6. Le mât 7 traverse donc la citerne sur toute sa hauteur. Il est constitué par plusieurs tronçons (7a, 7b, ...) fixés par des éclisses 8. Chaque tronçon du mât 7 a une section en forme de "H" et comporte sur l'une de ses faces internes une crémaillère 8a.

Suivant la hauteur de la citerne 1, le choix des tronçons du mât 7 est déterminé de sorte que son extrémité supérieure déborde à l'extérieur de la citerne 1 par l'ouverture 6 et que ce dépassement ne soit pas trop excessif. Cette extrémité est constituée par un fût cylindrique 10 fixé sur la partie supérieure du tronçon 7a le plus haut.

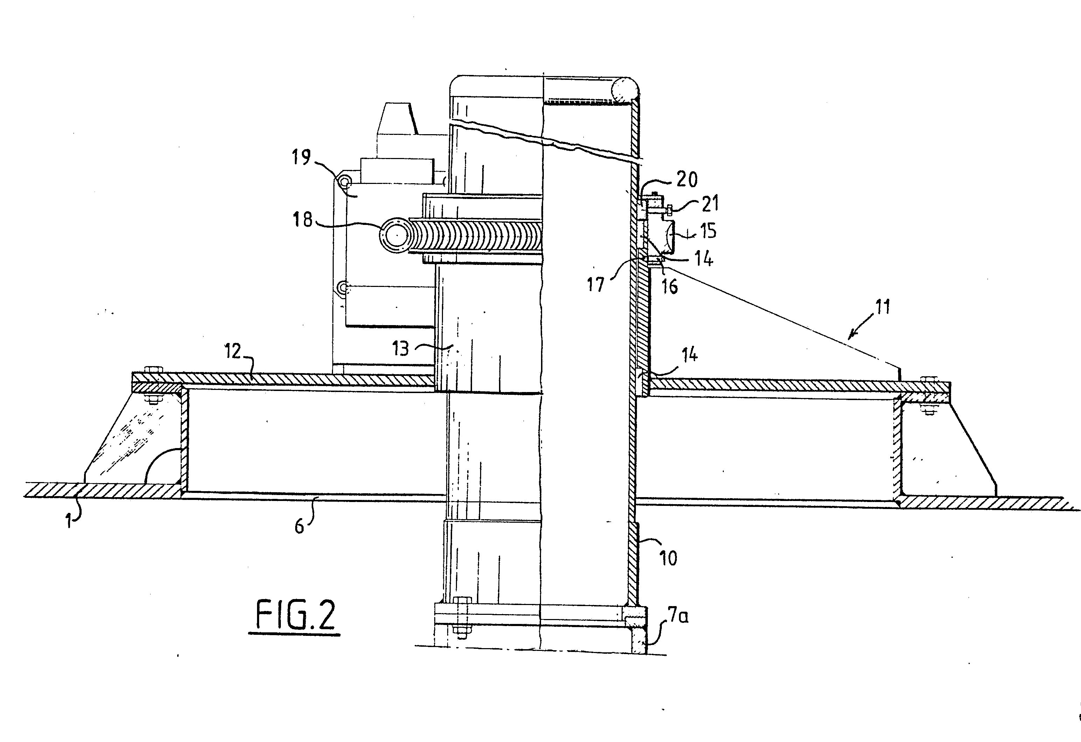

En se reportant maintenant à la Fig. 2, on va décrire les moyens de maintien de l'extrémité supérieure du mât 7.

Sur l'ouverture 6, à l'extérieure de la citerne 1, est montée une embase 11 constituée par une plaque horizontale 12 comportant dans l'axe de l'ouverture 6 une couronne 13 à l'intérieur de laquelle pénètre le fût 10. Cette couronne 13 a un diamètre interne légèrement supérieur au diamètre extérieur du fût 10 et est munie de deux patins de guidage 14 qui sont en contact avec ledit fût 10. Ces patins permettent la reprise du jeu dû à la flexion du mât 7. Sur le pourtour externe de la couronne 13 est montée, libre en rotation, une couronne dentée 15 centrée par des plots de guidage 16 pénétrant à l'intérieur d'une rainure 17 prévue sur la couronne 13. La rotation de la couronne dentée 15 est commandée par une vis sans

fin 18 entraînée par un moteur 19. Le mouvement de rotation de la couronne dentée 15 est transmis au fût 10 et par conséquent à l'ensemble du mât 7, par une bague 20, formée par trois secteurs de 120° qui sont appliqués sur le fût 10 et solidaires de la couronne dentée 15 par des vis 21.

Par conséquent, l'ensemble du mât 7 peut effectué une rotation de 360° à l'intérieur de la citerne 1.

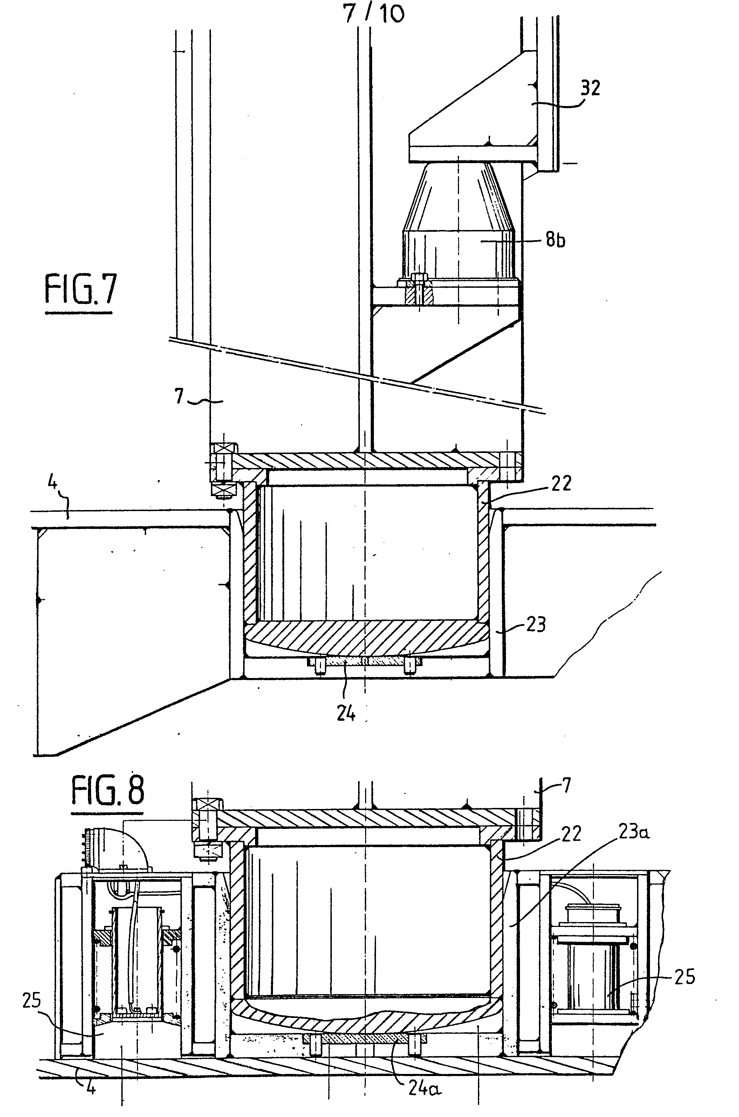

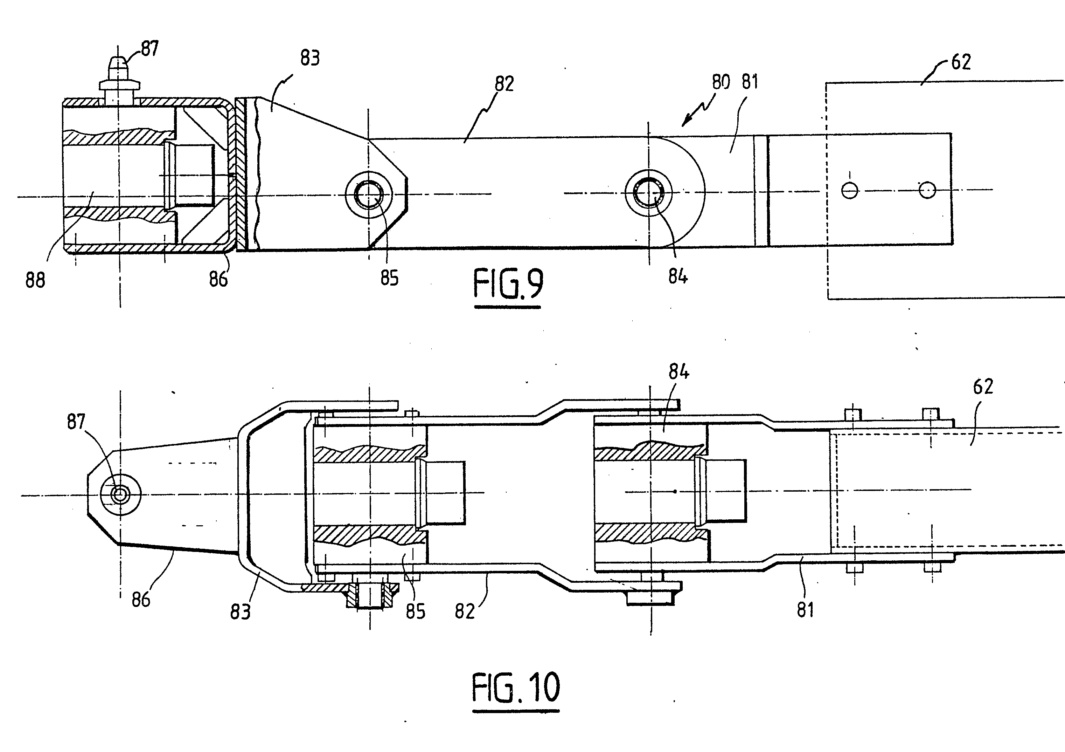

Comme nous l'avons mentionné auparavant, l'extrémité inférieure du mât 7 repose sur le fond 4 par des moyens de fixation et de guidage 9 représentés plus en détail sur les Fig. 7 et 8. A la partie inférieur du dernier tronçon du mât 7 est fixé un embout cylindrique 22 dont l'extrémité est légèrement arrondie.

Deux cas peuvent se présenter. Dans le cas d'une citerne neuve (Fig. 7), on peut prévoir au moment de sa construction, dans l'axe de l'ouverture 6, une crapaudine 23 dans le fond 4 de la citerne. L'embout cylindrique 22 vient se positionner dans la crapaudine 23 de façon à assurer le guidage et le centrage du mât 7. L'extrémité arrondie de l'embout cylindrique 22 est en appui sur une plaque d'usure 24 prévue dans le fond de la crapaudine 23.

S'il s'agit d'une citerne plus ancienne, le fond de ladite citerne ne comporte pas de moyens de guidage du mât. Dans ce cas (Fig. 8), on positionne sur le fond 4 de la citerne, dans l'axe de l'ouverture 6, une crapaudine 23a qui comporte des éléments amovibles de fixation 25 sur le fond, constitués par exemple par des électro-aimants ou des ventouses pneumatiques. L'embout cylindrique 22 du mât 7 vient se positionner dans la crapaudine 23a et repose également sur

6

une plaque d'usure 24a.

Sur le mât vertical 7 est monté un ensemble 30 qui constitue le robot proprement dit. Cet ensemble pivote en même temps que le mât 7 et peut se déplacer le long dudit mât. Il se compose d'un bloc porteur 31 supportant de manière articulée un bras 60 à plusieurs éléments également articulés entre eux, l'élément extrême du bras étant muni d'un organe porte-outil 80.

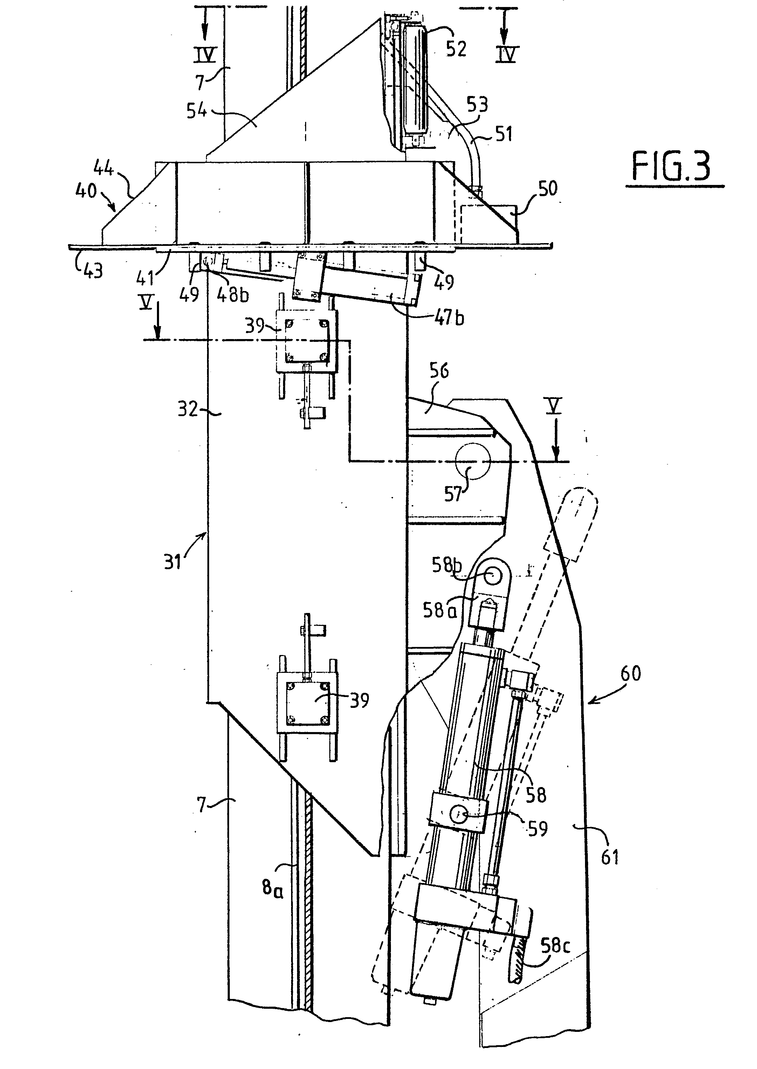

En se reportant aux Fig. 3 à 6, on va maintenant décrire plus en détail cet ensemble 30.

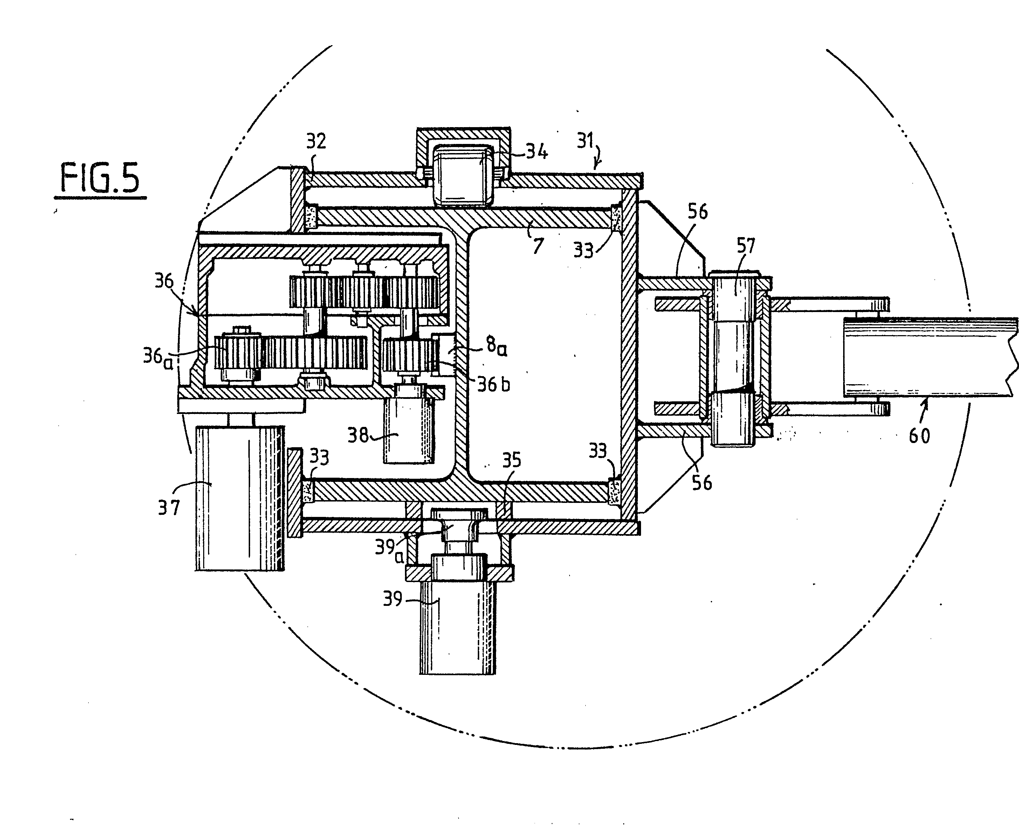

Le bloc porteur 31, supportant le bras 60, est constitué par un chariot 32 qui entoure le mât 7. Au cours de son déplacement le long du mât 7, le guidage transversal du chariot 32 est assuré par des patins 33 (Fig. 5) fixés sur les faces internes dudit chariot et qui sont en contact avec les extrémités des branches du mât 7. Par ailleurs, le guidage latéral est assuré d'un côté par des galets 34 qui s'appuient sur l'une des faces latérales du mât 7, et de l'autre côté par une glissière longidutinale 35 s'étendant sur toute la hauteur du chariot, et qui est en contact avec la face latérale opposée du mât 7. Le chariot 32 et par conséquent l'ensemble du bloc porteur 31 supportant le bras 60 est parfaitement guidé le long du mât.

La translation du chariot 32 est assurée par un réducteur 36. Le pignon d'entrée 36a de ce réducteur est monté sur un axe d'un moteur d'entraînement 37 supporté par le chariot, tandis que le pignon de sortie 36b est disposé en face de la crémaillère 8a du mât et s'engrène sur celle-ci. Le moteur 37 entraîne le réducteur 36 ce qui provoque par l'intermédiaire de la crémaillère 8a, la translation verticale dans un sens ou dans l'autre du chariot 32 et par conséquent

7

de l'ensemble du bloc porteur 31. Un codeur 38 est monté sur l'axe du pignon de sortie 36b permettant ainsi de connaître à tout moment la position verticale de l'ensemble porteur 31 sur le mât 7.

Le chariot 32 comporte également un système de blocage de sécurité formé par deux vérins 39 montés sur l'une des faces latérales du chariot à une certaine distance l'un de l'autre (Fig. 3 et 5). Le piston 39a de chaque vérin traverse la paroi du chariot 32 et vient s'appliquer sur la face externe du mât 7, notamment lors d'une absence d'alimentation provoquée par exemple par une coupure d'énergie ou un manque d'énergie, ou lors d'une nécessité d'utilisation. Grâce à ce système, on obtient un autoserrage en deux points situés sur la même génératrice.

Le déplacement vers le bas du chariot 32 est limité par une butée 8b fixée àla partie inférieure du mât 7 (Fig. 7).

Sur la partie supérieure du chariot 32, est prévu un ensemble de stockage ou ratelier 40 contenant un certain nombre d'outils de production en attente d'utilisation.

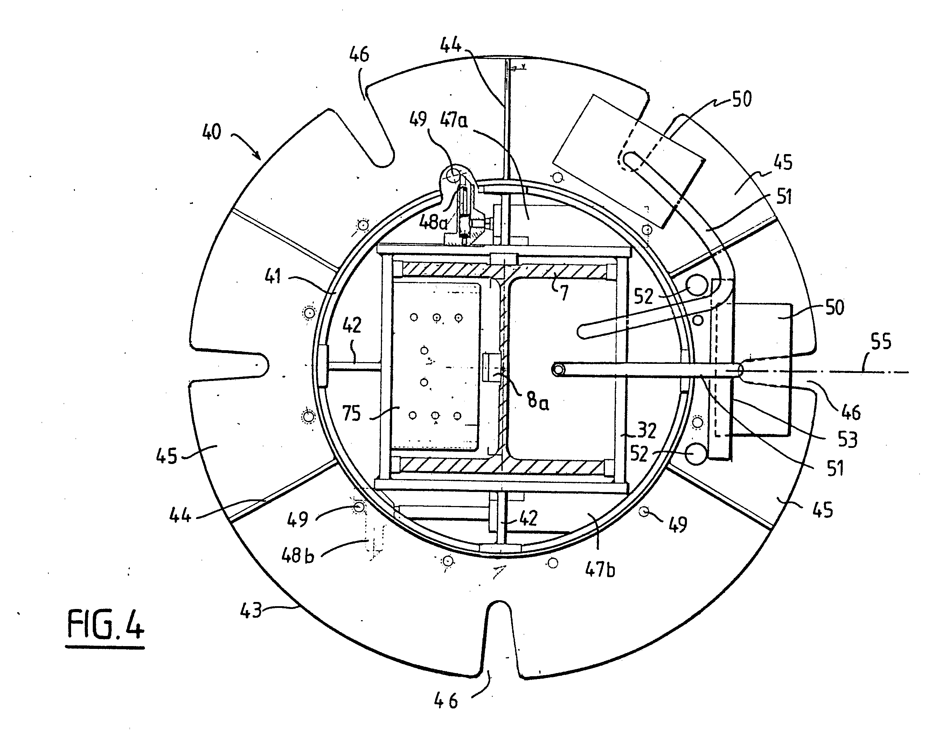

En se référant aux Fig. 3 et 4, on voit que ce ratelier 40 est constitué par un support cylindrique 41 fixé sur le chariot 32 par des entretoises 42. Un plateau circulaire 43 est monté libre en rotation sur le support 41. Le plateau 43 comporte des séparations verticales 44 qui déterminent des alvéoles 45 pour le stockage dans chacune d'elles d'un outil de production 50. Ces alvéoles 45 peuvent être plus ou moins grandes en fonction des dimensions des outils 50.

Le plateau 43 est muni, au centre de chaque alvéole 45, d'une rainure 46 pour la prise en charge

8

de l'outil par l'organe porte-outil 80 prévue à l'extrémité du bras 60. Cette prise en charge s'effectue toujours du même côté, figuré par l'axe 55 sur la Fig. 4. Par conséquent, en fonction de l'outil 50 à utiliser, il faut commander la rotation dans un sens ou dans l'autre du plateau 43 pour amener l'outil désiré dans la zone de préhension 55. A cet effet, le ratelier 40 comporte des moyens de commande de la rotation constitués par exemple par deux vérins linéaires 47a et 47b, fixés sur le chariot 32 au-dessous du plateau 43. L'extrémité libre du piston de chaque vérin 47a, 47b est muni d'un cliquet escamotable 48a, 48b qui agit sur des taquets 49 fixés sous le plateau 43. L'écartement entre chaque taquet 49 correspond à la course des vérins 47a, 47b. On voit donc que chaque vérin 47a, 47b commande la rotation du plateau 43 dans un sens en poussant successivement sur les taquets 49, les cliquets 48a, 48b s'escamotant pour le passage du pion suivant. La rotation du ratelier est donc réversible et s'effectue par pas de 30°.

Les vérins 47a, 47b peuvent évidemment être remplacés par un autre système de commande, par exemple par un ensemble moteur-roue dentée qui agit directement sur le plateau 43.

Les outils 50 peuvent être constitués par exemple par des organes de préparation de surface : peinture, sablage, nettoyage, meulage, soudage ou par des organes de contrôle à ultrasons ou optiques.

Les outils 50 sont maintenus dans les alvéoles 45 par des moyens de fixation amovibles quelconques, non représentés, qui libèrent l'outil au moment de sa préhension par l'organe porte-outil 80. Chaque outil 50 est relié en permanence par un cordon d'alimentation 51 à une cellule de production 100 (Fig. 1)

9

montée sur la paroi supérieure de la citerne 1, au-dessus de l'ouverture 6, comme on le verra ultérieurement. Chaque cordon 51 est maintenu sous tension par un enrouleur 101 placé dans la cellule 100 et est guidé au niveau du ratelier 40 par deux rouleaux verticaux 52 et un rouleau horizontal 53 fixés, au-dessus de la zone de prise en charge 55, sur l'extrémité supérieure du chariot 32 par des plaques verticales 54. Les cordons 51 de chaque outil 50 passent à l'intérieur du mât 7, puis entre les rouleaux verticaux 52. Dans la zone de prise en charge 55, le cordon 51 de l'outil choisi est guidé par le rouleau horizontal 53.

Le chariot 32 comporte sur l'une de ses parois latérales des flasques 56 entre lesquels est monté pivotant un premier élément 61 du bras 60 (Fig. 1 et 3). Sur l'autre extrémité du premier élément 61 est articulé un second élément 62.

En se reportant plus particulièrement à la Fig. 3, on voit que l'une des extrémités du premier élément 61 est articulée sur la partie supérieure des flasques 56 par l'intermédiaire d'un axe horizontal 57. Le basculement du bras 60 est commandé par un vérin linéaire à double action 58, monté pivotant sur la partie inférieure des flasques 56 par un pivot 59. L'extrémité du piston 58a du vérin est articulée en 58b sur l'élément 61 et commande le basculement de l'ensemble du bras 60 selon un angle limité par exemple à 90° comme représenté en pointillés sur la Fig. 3. L'alimentation du vérin 58 s'effectue par une conduite 58c.

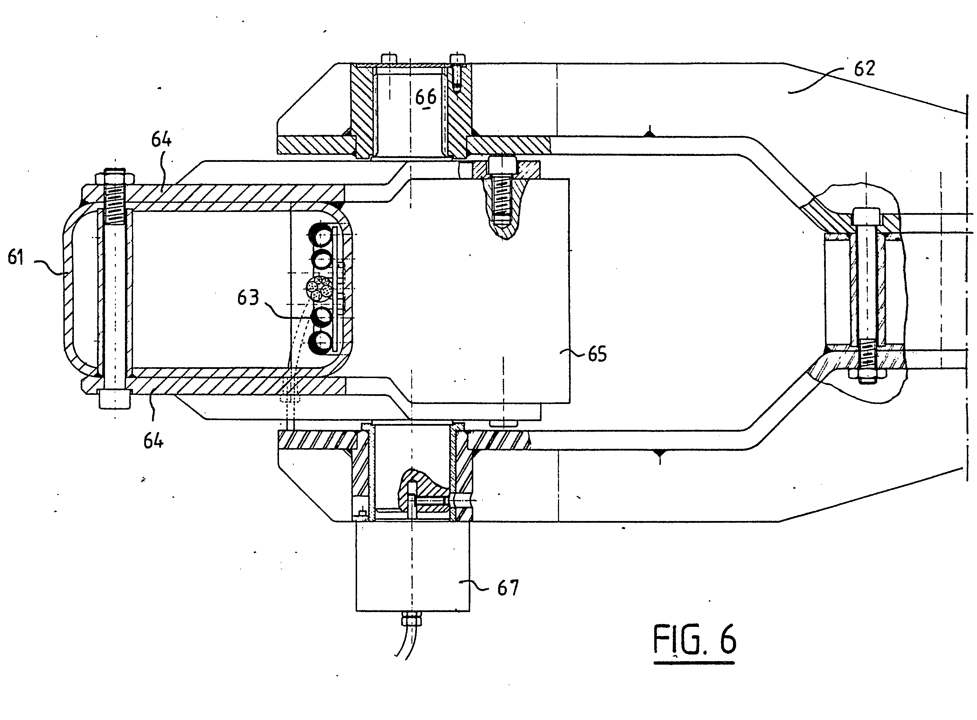

Sur la Fig. 6, on a représenté l'articulation C entre les deux éléments 61, 62 du bras 60.

Le premier élément 61 est formé par un profilé rectangulaire creux à l'intérieur duquel passent les différents câbles ou conduites d'alimentation 63 des organes de commande.

Sur l'extrémité du premier élément 61 sont montées deux plaques 64 qui supportent également un vérin rotatif 65. Ce vérin rotatif 65 comporte un axe 66 sur lequel est fixée l'extrémité du deuxième élément 62. Le vérin 65 commande donc le pivotement du deuxième élément 62 par rapport au premier élément 61 selon un angle par exemple de 280°. Un codeur 67 monté sur l'axe 61 permet de connaître avec précision l'angle d'ouverture entre les deux éléments du bras 60.

A l'extrémité opposée de cette articulation C, le second élément 62 du bras 60 supporte l'organe porte-outil 80 représenté plus en détail sur les Fig. 9 et 10.

Cet organe porte-outil 80 est constitué par plusieurs supports (81, 82, 83) articulés les uns par rapport aux autres. L'une des extrémités du premier support 81 est fixée sur l'élément 62 et l'autre extrémité supporte un vérin rotatif 84 sur l'axe duquel est monté le deuxième support 82. Ce vérin rotatif 84 commande le pivotement du deuxième support 82 par rapport au premier support 81, selon un angle pouvant atteindre au maximum par exemple 180°. Sur l'extrémité opposée du deuxième support 82, est également monté un vérin rotatif 85 sur l'axe duquel est fixé le troisième support 83. Ce second vérin rotatif 85 commande le pivotement du troisième support 83 par rapport au deuxième support 82 selon un angle pouvant atteindre au maximum, par exemple, 210°.

Sur le troisième support est montée une pièce 86 constituée par un élément mâle 87 pour la fixation d'un outil de production 50. Cet élément mâle 87, commandé par un vérin rotatif 88, peut pivoter sur

11

lui-même selon un angle déterminé pour assurer le clampage de l'outil.

La cellule de programmation et de contrôle 100 (Fig. 1) montée sur l'ouverture 6 comporte plusieurs enrouleurs 101 correspondant chacun à un outil de production 50, qui maintiennent en permanence les cordons d'alimentation 51 sous tension. Cette cellule est elle-même raccordée sur les différentes sources énergétiques et contient les pupitres de commande 102.

Les câbles ou conduites d'alimentation en énergie, de commande et de contrôle des différents moteurs, vérins et codeurs, sont également montés sur des enrouleurs, et sont intégrés dans le mât 7. Les raccordements de ces câbles ou conduites sont réalisés sur une plaque de base 75 prévue sur le chariot 32 (Fig. 4).

Le montage du robot dans la citerne 1 s'effectue de la manière suivante.

En fonction de la hauteur de la citerne 1, on détermine le nombre de tronçons du mât 7, de sorte que le fût 10 fixé sur le dernier tronçon déborde à l'extérieur de la citerne par l'ouverture 6. Après ce choix, les tronçons sont assemblés par les éclisses 8, le chariot 32 et son bras 60 en position repliée sont montés sur le mât 7, puis l'ensemble est présenté au droit de l'ouverture 6 par un moyen de levage, et descendu jusqu'à son point de fixation sur le fond 4 de la citerne.

La cellule 100 est amenée sur l'ouverture 6 et fixée sur la paroi supérieure de la citerne.

Ensuite, on monte l'embase 11 sur l'ouverture 6 et on ajuste, en fonction de la hauteur du mât 7, le système d'entraînement 15, 20, 21 sur le fût 10 permettant la rotation sur 360° de l'ensemble du mât.

12

Enfin, on raccorde les cordons d'alimentation 51 des outils de production 50 sur les différents enrouleurs 101 et on raccorde la cellule 100 sur les sources énergétiques. L'opérateur, depuis la cellule 100, peut lancer l'ordre de commencement des opérations.

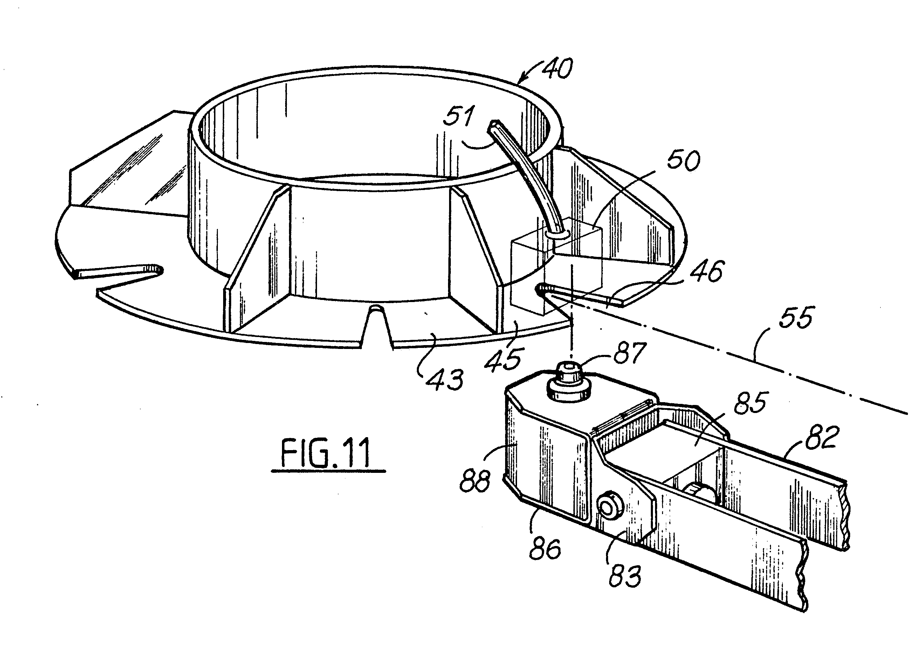

En fonction du traitement à effectuer, l'opérateur commande la rotation du ratelier 40, pour amener l'outil 50 choisi dans l'axe 55 de prise en charge par l'organe porte-outil 80. L'opérateur commande le vérin 58 pour amener le bras 60 en position horizontale (Fig. 1) de telle sorte que l'organe porte-outil 80 se positionne dans l'axe 55 (Fig. 11). Ensuite, l'opérateur commande les vérins rotatifs 84 et 85 pour que l'élément mâle 87 traverse la rainure 46 du ratelier et pénètre dans l'élément femelle correspondant prévu dans l'outil 50. Le vérin 88 fait pivoter l'élément mâle 87 de façon à assurer la fixation de l'outil 50 sur l'organe 80.

Les opérations de traitement des parois internes de la citerne 1 peuvent donc commencer.

L'opérateur dispose également d'une base de données informatisée qui a en mémoire les dimensions de la citerne ainsi que les différents obstacles se trouvant à l'intérieur de ladite citerne. Grâce à la combinaison des différents mouvements du robot, c'est-à-dire la rotation du mât sur 360°, la translation du chariot sur le mât, le pivotement du bras sur le chariot et des éléments du bras entre eux, ainsi que le pivotement des supports entre eux de l'organe porte-outil, il est possible d'atteindre tous les points de la citerne et de contourner tous les obstacles.

En fonction des indications de la base de données, l'opérateur programme le déplacement du robot à l'intérieur de la citerne pour assurer le traitement

0194926

13

des parois internes. Il commande également les changements d'outils en ramenant l'organe porte-outil au-
dessous du ratelier. L'opérateur connait en permanence
la position du robot grâce aux différents codeurs.

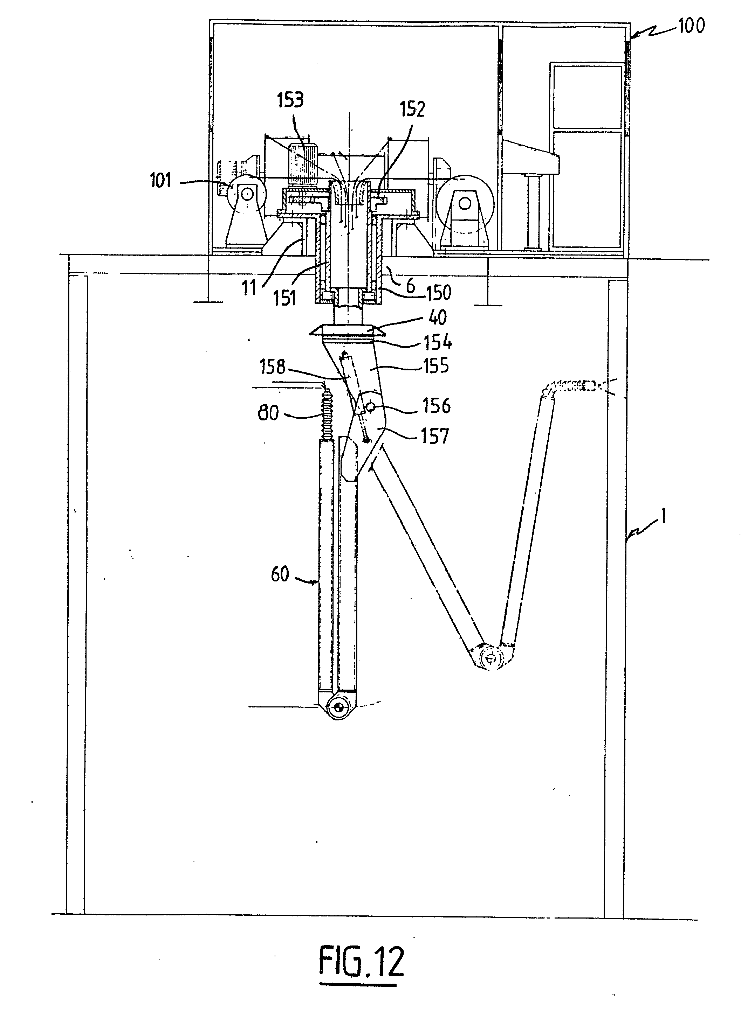

Sur la Fig. 12, on a représenté un autre
mode de réalisation du robot suivant l'invention pour
le traitement de citernes de plus petites dimensions.

La citerne 1 comporte également une ouverture 6 dans laquelle est montée une embase 11. Cette
embase 11 supporte une couronne 150 qui traverse l'ouverture 6. Dans la couronne 150 est monté libre en rotation un fût 151 entrainé sur 360° par une couronne
dentée 152 et un moteur 153. A la partie inférieure du
fût 151 est fixée une plaque 154 supportant des flasques 155 à l'extrémité desquels est montée pivotante,
sur un axe 156, une équerre 157. Cette équerre 157
supporte le bras 60 à plusieurs éléments articulés
entre eux identiques au bras décrit dans l'exemple
précédent. Un vérin linéaire à double effet 158
positionné entre les flasques 155 et l'équerre 157
commande le basculement du bras 60 autour de l'axe
156.

Au-dessus de la plaque 154, le fût 151 est
également muni d'un ratelier 40, et le bras 60 comporte un organe porte-outil 80 identique à celui décrit
dans la réalisation précédente.

On retrouve également dans ce cas, une cellule de programmation et de contrôle 100 renfermant
les différents systèmes de commande et d'alimentation.

Le fonctionnement de ce second mode de réalisation est comparable à celui qui a été décrit précédemment.

Ce robot permet, sans présence humaine directe, d'effectuer automatiquement des opérations très

14

variées de traitement ou d'inspection des parois internes de cuves ou citernes de grandes dimensions ou d'accès difficile.

Bien entendu, l'invention n'est pas strictement limitée aux différents modes de réalisation décrits à titre d'exemples, mais elle couvre également les réalisations qui n'en différeraient que par des détails, par des simples variantes d'exécution ou par l'utilisation de moyens équivalents.

0194926

15

<u>REVENDICATIONS</u>

1.- Robot multitâches pour le traitement des parois internes de cuves ou de capacités de grandes dimensions comportant :

- un organe support (7, 151) monté dans une ouverture (6) prévue sur la paroi supérieure (2) de la citerne (1) et pénétrant à l'intérieur de ladite citerne, ledit organe support définissant un axe de pivotement perpendiculaire à la paroi supérieure de la citerne,

- un ensemble de bras articulés (60) montés sur ledit organe support et pouvant se déployer à l'intérieur de la citerne,

- un organe porte-outil (80) à plusieurs degrés de liberté fixé à l'extrémité de l'ensemble articulé (60) et assurant la mise en position et le mouvement d'un outil de production (50),

- des moyens de commande et de contrôle de l'orientation de l'organe support, de l'ensemble de bras articulés, et de l'organe porte-outil,

caractérisé en ce que l'organe support (7, 151) guidé dans l'ouverture (6) de la paroi supérieure (2) de la citerne (1) par une embase (11) et entrainé en rotation sur 360° par un système d'entrainement (15, 152), est constitué par un mât modulaire (7) s'étendant sur toute la hauteur de la citerne (1) et sur lequel est guidé en translation verticale un bloc porteur (31) supportant de manière articulée un bras (60) à plusieur éléments (61, 62) également articulés entre eux.

2.- Robot selon la revendication 1, caractérisé en ce que l'organe support est constitué par un fût (151) supportant par l'intermédiaire de flasques (155) et d'équerres (157) articulés entre eux, un bras (60) à plusieurs éléments (61, 62) également articulés entre eux.

3.- Robot selon la revendication 1, caractérisé en ce que le mât modulaire (7) est formé, en fonction de la hauteur de la citerne (1), par plusieurs tronçons (7a, 7b, ...) fixés entre eux par des éclisses (8), chacun de ces tronçons ayant une section en forme de "H" et comportant sur l'une de ses faces internes une crémaillère (8a).

4.- Robot selon la revendication 1, caractérisé en ce que l'extrémité inférieure du mât (7) est guidé, dans l'axe de l'ouverture (6) par une crapaudine (23) prévue directement sur le fond (4) de la citerne (1).

5.- Robot selon la revendication 1, caractérisé en ce que l'extrémité inférieure du mât (7) est guidée, dans l'axe de l'ouverture (6) par une crapaudine (23a) amovible comportant des éléments de fixation (25) sur le fond (4), constitués par exemple par des électro-aimants ou des ventouses pneumatiques.

6.- Robot selon la revendication 1 caractérisé en ce que l'extrémité supérieure du mât modulaire (7) est munie d'un fût (10) pénètrant à l'intérieur d'une couronne (13) de l'embase (11), et entraîné en rotation par une couronne dentée (15) et une vis sans fin (18) commandée par un moteur (19).

7.- Robot selon la revendication 6, caractérisé en ce que la couronne dentée (15) est centrée sur la couronne (13) par des plots de guidage (16) pénétrant à l'intérieur d'une rainure (17) prévue sur ladite couronne (13), et en ce que le mouvement de rotation est transmis au fût (10) et à l'ensemble du mât (7) par une bague (20) formée par plusieurs secteurs, appliquée sur le fût (10) et solidaire de la couronne dentée (15) par des vis (21).

8.- Robot selon les revendications 1 et 3 caractérisé en ce que le bloc porteur (31) est constitué par un chariot (32) entourant le mât (7) et entraîné en translation verticale le long dudit mât par un moteur (37) lié à un réducteur (36) dont le pignon de sortie (36b) s'engrène sur la crémaillère (8a) du mât (7).

9.- Robot selon la revendication 8 caractérisé en ce qu'un codeur (38) enregistre et transmet la position du chariot (32) sur le mât (7).

10.- Robot selon la revendication 8, caractérisé en ce que le guidage transversal du chariot (32) sur le mât (7) est assuré par des patins (33) fixés sur les faces internes dudit chariot et le guidage latéral est assuré, d'un côté, par des galets (34) qui s'appuient sur l'une des faces latérales du mât (7) et, de l'autre côté, par une glissière longitudinale (35) qui est en contact avec la face opposée dudit mât.

11.- Robot selon les revendications 8 et 10 caractérisé en ce que le chariot (32) comporte un système de blocage de sécurité formé par exemple par deux vérins (39) montés sur l'une des faces latérales dudit chariot à une certaine distance l'un de l'autre.

12.- Robot selon les revendications 1 et 2, caractérisé en ce que le basculement du bras (60) par rapport à l'organe support (7, 151) est commandé par un vérin linéaire (58, 158) à double effet.

13.- Robot selon la revendication 1, caractérisé en ce qu'il comporte également un ensemble de stockage (40) contenant un certain nombre d'outils de production (50) reliés à des moyens d'alimentation.

14.- Robot selon la revendication 13, caractérisé en ce que l'ensemble de stockage monté sur le bloc porteur (31) ou sur le fût (151) est constitué par un ratelier (40) comprenant un support cylindrique (41) sur lequel est monté libre en rotation un plateau circulaire (43) muni de séparations verticales (44) qui déterminent des alvéoles (45) pour le stockage dans chacune d'elles d'un outil de production (50).

15.- Robot selon la revendication 14, caractérisé en ce que le plateau (43) est muni, au centre de chacune des alvéoles (45), d'une rainure (46) pour la prise en charge de l'outil (50) par l'organe porte-outil (80).

16.- Robot selon les revendications 14 et 15 caractérisé en ce que le plateau (43) est entrainé en rotation pas à pas dans un sens ou dans l'autre par des moyens de commande constitués par exemple par deux vérins linéaires qui agissent chacun dans un sens sur des taquets (49) fixés sous le plateau (43).

17.- Robot selon les revendications 14 et 15 caractérisé en ce que les outils (50) sont maintenus dans les alvéoles (45) par des moyens de fixation amovibles quelconques qui libèrent l'outil au moment de sa préhension par l'organe porte-outil (80).

18.- Robot selon les revendications 14 et 15 caractérisé en ce que chaque outil (50) est muni en permanence d'un cordon d'alimentation (51) guidé au niveau du ratelier (40) par des rouleaux (52, 53) fixés au-dessus de la zone de préhension (55).

19.- Robot selon la revendication 1, caractérisé en ce que l'extrémité de l'organe porte-outil (80) est munie d'une pièce (86) constituée par un élément mâle (87) pour la fixation de l'outil de production (50).

0194926

FIG1

FIG.2

0194926

FIG.3

0194926

FIG.4

FIG.5

5/10

0194926

FIG. 6

0194926

**FIG.7**

7 / 10

32

8b

7

4

22

23

24

**FIG.8**

7

22

23a

25

25

4

24a

FIG.9

FIG.10

87 83 82 80 81 62

88 86 85 84

87 84 62

86 83 85 82 81

0194926

0194926

FIG.11

40, 50, 46, 51, 45, 43, 55, 85, 87, 82, 83, 86, 88

0194926

FIG.12

Office européen
des brevets

**RAPPORT DE RECHERCHE EUROPEENNE**

**0194926**
Numéro de la demande

EP 86 40 0457

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl.4) |
|---|---|---|---|
| Y | FR-A-2 275 256 (SHELL INTERNATIONALE RESEARCH MIJ.) * Page 3, lignes 7-26; page 4, lignes 3-7 * --- | 1,2 | B 25 J 11/00 B 25 J 5/04 B 25 J 21/00 B 05 B 13/06 B 63 B 57/02 |
| Y | EP-A-0 050 561 (COMMISSARIAT A L'ENERGIE ATOMIQUE) * Page 5, ligne 33 - page 6, ligne 8; page 7, lignes 3-26; figures 3,4 * --- | 1,2 | |
| A | FR-A-2 456 247 (BOSSANT) * Page 4, lignes 3-16 * --- | 1,2 | |
| A | GB-A-1 585 851 (BERGESEN) * Page 1, lignes 85-94; page 2, lignes 31-41 * --- | 1-3,5, 6 | |
| A | US-A-3 968 764 (KVAMSDAL et al.) * Colonne 6, lignes 44-47 * --- | 4 | DOMAINES TECHNIQUES RECHERCHES (Int. Cl.4) B 25 J B 08 B B 63 B B 05 B G 21 C G 21 F |
| A | FR-A-2 526 214 (DEUTSCHE GESELLSCHAFT FÜR WIEDERAUFARBEITUNG VON KERNBRENNSTOFFEN mbH) * Page 7, lignes 7-15; page 14, lignes 3-15 * --- | 8 | |
| A | WO-A-8 400 318 (ALFA-LAVAL AB) * Page 6, lignes 7-23 * --- -/- | 11 | |

Le présent rapport de recherche a été établi pour toutes les revendications

| Lieu de la recherche | Date d'achèvement de la recherche | Examinateur |
|---|---|---|
| LA HAYE | 23-05-1986 | LAMMINEUR P.C.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

| Categorie | Citation du document avec indication, en cas de besoin, des parties pertinentes | Revendication concernee | CLASSEMENT DE LA DEMANDE (Int Cl 4) |
|---|---|---|---|
| A | DE-A-1 456 494 (EFA TEX AUTOMATIC GmbH) * Page 3, lignes 8-15; figures * --- | 12 | |
| A | DE-A-2 852 502 (RENAULT) * Page 14, lignes 16-21; page 16, lignes 12-15 * --- | 13 | |
| A | DE-A-2 912 658 (COMBUSTION ENGINEERING INC.) * Revendications * --- | 14,15, 17 | |
| A | GB-A- 6 164 (LAKE)(A.D. 1909) * Page 1, lignes 18-31 * --- | 16 | |
| A | EP-A-0 120 275 (PONT-A-MOUSSON S.A.) * Résumé * --- | 15,17 | DOMAINES TECHNIQUES RECHERCHES (Int. Cl.4) |
| A | GB-A-2 118 522 (MESSERSCHMITT-BÖLKOW-BLOHM GmbH) * Résumé * --- | 19 | |
| A | US-A-4 227 853 (WOODFORD et al.) * Colonne 2, ligne 57 - colonne 3, ligne 6 * --- | 14,19 | |
| A | DE-B-2 325 388 (SIEMENS AG) --- -/- | | |

Le présent rapport de recherche a été établi pour toutes les revendications

| Lieu de la recherche LA HAYE | Date d'achèvement de la recherche 23-05-1986 | Examinateur LAMMINEUR P.C.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

Office européen
des brevets

**RAPPORT DE RECHERCHE EUROPEENNE**

**0194926**
Numéro de la demande

EP  86 40 0457

Page  3

## DOCUMENTS CONSIDERES COMME PERTINENTS

| Catégorie | Citation du document avec indication en cas de besoin, des parties pertinentes | Revendication concernée | CLASSEMENT DE LA DEMANDE (Int Cl 4) |
|---|---|---|---|
| A | US-A-4 163 455  (HEBERT et al.)<br><br>--- | | |
| A | GB-A-1 533 165  (BERGESEN)<br><br>--- | | |
| A,P | EP-A-0 155 375  (KRAFTWERK UNION AG)<br><br>--- | | |
| A,P | DE-C-3 419 086  (KRAFTWERK UNION AG)<br><br>---<br><br>----- | | |

DOMAINES TECHNIQUES
RECHERCHES (Int. Cl.⁴)

Le présent rapport de recherche a été établi pour toutes les revendications

| Lieu de la recherche | Date d'achèvement de la recherche | Examinateur |
|---|---|---|
| LA HAYE | 23-05-1986 | LAMMINEUR P.C.G. |